# EUROPEAN PATENT APPLICATION

(11) **EP 1 248 443 A1**
(43) Date of publication of application: **09.10.2002**
(21) Application number: 01108419.1
(22) Date of filing: 03.04.2001
(51) Int. Cl.: H04M 1/247, H04M 1/23

(54) **Voice broadcasting method on cellular phone's buttons**

(71) Applicant: Inventec Appliances Corp., Wugu Shiang, Taipei (TW)
(72) Inventor: Chen, Kun-Huei, c/o Inventec Appliances Corp., Taipei, Taiwan (CH); Liao, Hsin-Chih, c/o Inventec Appliances Corp., Taipei, Taiwan (CH)
(74) Representative: TER MEER STEINMEISTER & PARTNER GbR

(57) **Abstract**

The present invention pertains to a voice broadcasting method on cellular phone's buttons. The method is applied to let users listen and learn the corresponding message of each button on the cellular phone through the way of voice broadcasting in the meantime while they operate the keypad on the cellular phone. When users dial numbers or set any function of the cellular phone, according to the steps' order of the buttons being operated, the present invention informs users the steps' names by voice broadcasting at the right moment so that users are able to assure themselves whether the steps are correct or not. Due to the present invention capable of providing synchronous voice broadcasting of cellular phone's buttons, especially, when the light is dim in the operating surroundings or the cellular phones do not have any spontaneous light source, users are still able to confirm the accuracy of dialing numbers or setting functions.

## Description

### BACKGROUND OF THE INVENTION

### Field of Invention

The present invention relates to a voice broadcasting method on cellular phone's buttons, in particular, to a method that utilizes the way of voice broadcasting for synchronously informing users each step's message while users operate any button on the cellular phones.

### Related Art

To design a variety of functions on cellular phone is an object to let users feel convenient while they use it. However, it is usually very uncertain about the using surroundings of the cellular phone, for example: maybe the cellular phone is used in a humid, noisy or dim environment. Therefore, it is also an important issue to design some attached functions on the cellular phone in order to eliminate the potential obstacles from different operating surroundings. For instance, currently while users dial phone numbers or set any function, the sense of sight and the sense of touch are usually the interface between cellular phones and users. That is to say, first, users operate the buttons on the keypad of the cellular phone and then observe the display showed on its screen with their eyes to be the basis of going to next step. But if the operation mentioned above is doing under an environment of lacking light and the cellular phone does not have any spontaneous light source, it is very easy to dial wrong numbers or to let the operation disordered.

Otherwise, general manufacturers of cellular phone they provide a kind of quickly dialing method which is able to reduce the frequency of pushing buttons so as to avoid dialing wrong numbers or making a mistake in operating processes. For example, some have the function of dialing by single button. Users only need to press one button then the cellular phone is able to send a string of phone numbers and gets through with the opposite side. Or when users would like to set any function of cellular phone, after starting the function menu, the needing function is going to be set correctly and rapidly by pushing a few specific number buttons in a row.

However, these methods mentioned above basically still rely on the sense of sight and the sense of touch being the interface between cellular phones and users. They only reduce the frequency of pushing buttons to lower the opportunity of dialing wrong numbers or making a mistake in operating processes.

Hence, if there is a synchronous voice broadcasting method on cellular phone's buttons, it is going to let users listen and learn every step's name synchronously so as to achieve the aim of sending the related messages of the buttons to users when they operate the buttons on cellular phones. Hereinto, users are able to further assure themselves that they push the right buttons or not so as to substantially reduce the probability of making mistakes.

These years, though, the technologies of voice broadcasting on cellular phone are developed rapidly. For example: US patent 4495647 in 1985 disclosed a kind of method that takes advantage of CVSD circuit system to store up voice data. But it didn't use compressed and decompressed technologies so that it has to consume a 1ot of memories and just able to store a short voice message. Then, US patent 5105197 in 1992 uses compressed and decompressed technologies to store voice messages in SRAM (Static Random-access Memory). Its weakness is that there is a delay on the broadcasting speed. Later, US patent 5630205 in 1997 disclosed a kind of method that is able to compress voice messages and store them into a cellular phone's memory. The method lets the voice broadcasting speed, functions and storing capacity of the cellular phone improve obviously. But the attention of the patent is forced on the report of latest event. In other words, the status of the cellular phone is going to be reported by the way of voice broadcasting to remind users about the latest condition of their cellular phone, such like failing connecting, communication hindered, station searching, system service or volume of battery, etc. However, it still did not provide the function of synchronous voice broadcasting on cellular phone's buttons.

No doubt, the voice broadcasting technologies of cellular phone messages are applied widely. The present invention is going to disclose a new voice broadcasting technology for cellular phone messages, which integrates cellular phone's keypad and is able to send out synchronous voice messages to let users learn the corresponding name of every specific button.

### SUMMARY OF THE INVENTION

In view of the foregoing, it is an object of the invention to provide a voice broadcasting method on cellular phone's buttons. When users dial numbers or set any function of the cellular phone, according to the steps' order of the buttons being operated, the present invention informs users the steps' names through the way of voice broadcasting at the right moment so that users are able to assure themselves whether the steps are correct or not. Otherwise, the present invention further solve the problem that current cellular phone is only capable of using the sense of sight and the sense of touch to be the interface of communication. It lets users be able to get accurate messages of dialing numbers or setting functions through a better and more proper way.

Pursuant to the above object, the present invention just utilizes the original functions of recording-and-playing unit and voice broadcasting unit which both have belonged to current cellular phones to achieve the above object. One point of the present invention is to add or enhance the functions of software. That is to say to integrate the buttons unit with the recording-and-playing unit together. Moreover, the present invention further builds a couple of voice databases, including a built-in voice database and a self-recording voice database. For extending the functions and capabilities of above software and voice databases, it is necessary to add certain capacity of flash memory or Mask ROM.

When users are dialing phone numbers or setting any functions, according to the buttons signals received by the buttons unit, it starts the voice databases and automatically broadcasts the messages or names of the buttons through the recording-and-playing unit. Otherwise, the recording-and-playing unit is able to record another content of voice broadcasting, which bases on users' preference, and store the content of voice broadcasting in the self-recording voice database.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 depicts a flow chart of the system structure of the present invention; and
FIG. 2 depicts a function flow chart of the best embodiment of the present invention.

### DETAILED DESCRIPTION OF THE INVENTION

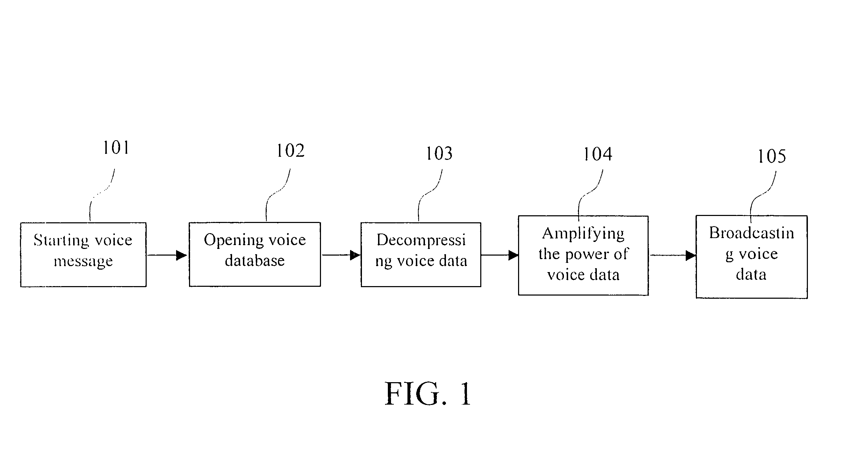

With reference to FIG. 1, the voice broadcasting method on cellular phone's buttons disclosed by the present invention at least comprises the steps as following:
a. Starting voice message ( step 101) :
   It is the beginning to carry out the voice broadcasting method on cellular phone's buttons. The step is started by an action of pressing one of the cellular phone's buttons. It means that when the cellular phone user is dialing phone numbers or setting functions, the step is going to get the relative signals of the buttons.
b. Opening voice database ( step 102 )
   The voice database is a place which is able to provide corresponding voice data of the relative signals. When the cellular phone user is dialing phone numbers or setting functions, the step is going to read the relative signals and find out the corresponding voice data from the voice database. According to its characteristic, the voice data is further divided into two kinds - one is the voice data recorded by the cellular phone user; the other is the built-in voice data of the cellular phone.
c. Decompressing voice data ( step 103 )
   After finding out the corresponding and compressed voice data from the voice database, the step further provides the decompressing action to decompress the corresponding voice data and lets it turn into an analogic voice message.
d. Amplifying the power of voice data ( step 104 ) :
   After decompressing the corresponding voice data and letting it turn into an analogic voice message, the step further amplifies the power of the analogic voice message so as to benefit the transmission of the voice message.
e. Broadcasting voice data ( step 105 ) :
   The step does the jobs of receiving and broadcasting the voice message after its power being amplified. The way of broadcasting can utilize current devices of cellular phone such like built-in speaker, voice-amplifying system for not holding receiver, or wired listening devices such like headset and earphone, or other wireless listening technologies.

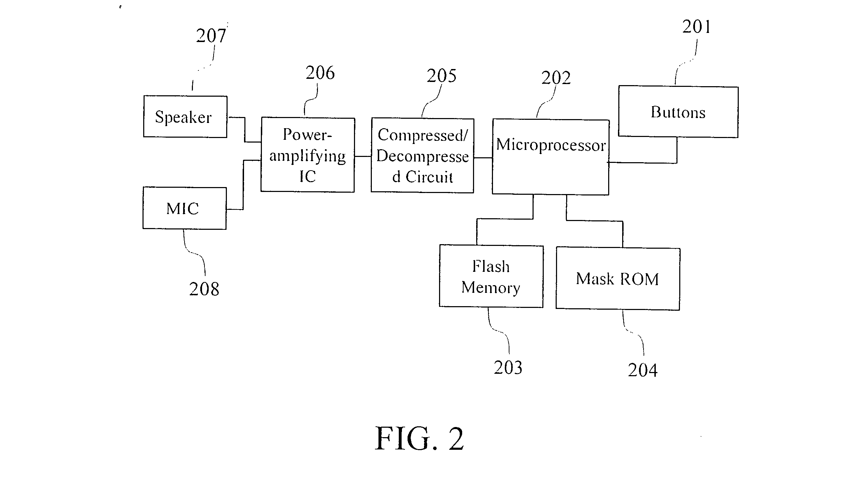

With reference to FIG. 2, when a user is dialing phone numbers or setting functions of the cellular phone, according to the steps' order of the buttons being operated, the present invention informs the user the steps' names by the way of voice broadcasting at the right moment so that the user is able to ensure whether the steps are correct or not.

When a user presses anyone of the cellular phone's buttons 201 for dialing phone numbers or setting functions, it starts voice message ( step 101 ) . At the time, a microprocessor 202 is going to generate a temporary interrupted operation to execute the work of voice broadcasting. First, the microprocessor 202 gathers the signals from the buttons 201 and opens the voice database ( step 102) , which is stored in flash memory 203 ( when the voice database is a self-recording voice database ) or Mask ROM 204 ( when the voice database is a built-in voice database) , and read relative voice data. After the proceeding of the microprocessor 202, a compressed/ decompressed circuit 205 further proceeds to decompress voice data (step 103) and turn the digital voice data into an analogic voice message. Then, send the analogic voice message to a power-amplifying unit and start a power-amplifying IC 206 to amplify the power of the voice message ( step 104). And then synchronously broadcast the voice message ( step 105 ) by a speaker 207, which belongs to a voice broadcasting unit, so as to achieve the effect of getting the button's message through hearing.

The present invention is able to provide users to choose and use a built-in voice database or a self-recording voice database to be the voice database. Therefore, the present invention has to maintain the voice data stored in the self-recording voice database. The maintenance work at least comprises recording, modifying and deleting voice data.

Wherein, about the procedure of recording, please refer to FIG. 2. First, switch on a microphone 208, which belongs to the voice broadcasting unit, to receive the content of voice being recorded. Then the cellular phone user speaks a voice message and let it go through the microphone 208. The voice message further passes through the power-amplifying IC 206 to amplify the power of the voice message. Later, the voice message is compressed by the compressed/ decompressed circuit 205 and become a digital voice signal. Then the digital voice signal is sent to the microprocessor 202. After dealing with it, the digital voice signal is written into the flash memory 203, where the voice database is, as the content of self-recording data.

### Effects of the invention

The present invention carries out the function of automatic voice broadcasting by adding "voice data system" and "voice broadcasting system" in current cellular phones. Its advantages are showed as following:
1.The present invention provides a new way - listening - to let users choose for obtaining messages from cellular phones. Any message of cellular phones is going to be pointed out to users real time by the way of voice broadcasting.
2.Because the present invention is capable of informing users messages by the way of automatic voice broadcasting, users can know whether the buttons being pressed are correct or not. It avoids the trouble of observing the screen again.
3.Due to the present invention is capable of providing the synchronous voice broadcasting of cellular phone's buttons, when the light is dim in the operating surroundings or the cellular phone does not have any spontaneous light source, users are still able to confirm the accuracy of dialing numbers or setting functions.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A voice broadcasting method on cellular phone's buttons, which comprises the steps of:
a. starting a message start unit while one of the cellular phone's buttons is pressed so as to acquire a relative signal of the pressed button;
b. taking a corresponding voice data from a voice database according to the relative signal of the button;
c. decompressing the voice data into an analogic voice message;
d. amplifying the power of the analogic voice message; and
e. broadcasting the analogic voice message, which has been decompressed and whose power has been amplified, by a voice broadcasting unit.

2. The method of claim 1, wherein the relative signal of the pressed button in step (a) is generated when users press one of the cellular phone's buttons for dialing phone numbers or setting various functions.

3. The method of claim 1, wherein the voice database in step (b) is a self-recording voice database which is stored in flash memory.

4. The method of claim 1, wherein the voice database in step (b) is a built-in voice database which is stored in Mask ROM.

5. The method of claim 1, wherein step (c) utilizes a compressed/ decompressed circuit to proceed the decompressing action of the voice data.

6. The method of claim 1, wherein step (d) utilizes a power amplifying IC to amply the power of the voice message.

7. The method of claim 1, wherein the voice broadcasting unit in step (e) is selected from the group comprising a built-in speaker, a voice-amplifying system for not holding receiver, a wired listening device, a headset and an earphone.

8. A voice broadcasting method on cellular phone's buttons, which comprises the steps of:
a. opening a voice broadcasting unit to receive a voice message from the cellular phone user;
b. amplifying the power of the voice message;
c. compressing the voice message into a digital voice signal; and
d. writing the digital voice signal into a self-recording voice database.

9. The method of claim 8, wherein step (a) utilizes a microphone to receive the voice message that the user want to record.

10. The method of claim 8, wherein step (b) utilizes a power amplifying IC to amply the power of the voice message.

11. The method of claim 8, wherein step (c) utilizes the compressing action of a compressed/ decompressed circuit to transform the voice message into the digital voice signal.

12. The method of claim 8, wherein the self-recording voice database in step (d) is stored in flash memory.
